Europäisches Patentamt

European Patent Office

Office européen des brevets

(11) Publication number: **0 292 633**
**A1**

# (12) EUROPEAN PATENT APPLICATION

(21) Application number: 87830447.6

(51) Int. Cl.⁴: **B60Q 1/44**

(22) Date of filing: **17.12.87**

(30) Priority: **18.12.86 IT 2274086**

(43) Date of publication of application:
**30.11.88 Bulletin 88/48**

(84) Designated Contracting States:
**DE ES FR**

(71) Applicant: **Shettino, Gaetano**
**Via Palianese, 31**
**I-03012 Anagni (FR)(IT)**

Applicant: **Tedeschi, Aldo**
**Villaggio Brugherio, 73**
**I-20047 Brugherio (MI)(IT)**

(72) Inventor: **Shettino, Gaetano**
**Via Palianese, 31**
**I-03012 Anagni (FR)(IT)**
Inventor: **Tedeschi, Aldo**
**Villaggio Brugherio, 73**
**I-20047 Brugherio (MI)(IT)**

(74) Representative: **Mascioli, Alessandro, Prof.Dr.**
**c/o A.N.D.I. Associazione Nazionale degli**
**Inventori Via Lima, 35**
**I-00198 Roma(IT)**

(54) **A device for automatically inserting the emergency lights on vehicles in the case of sudden decelerations.**

(57) The device according to the present invention may be applied to vehicles and similar and comprises an inertial switch (15) and an electric circuit for the lighting of the emergency lights, and therefore for the contemporary blinking of all direction indicators on occasion of sudden decelerations caused by sudden and prolonged brakings and eventual collisions, mostly frontal.

EP 0 292 633 A1

"A device for automatically inserting the emergency lights on vehicles in the case of sudden decelerations".

The present invention concerns a device with an inertial switch for automatically inserting the emergency lights on vehicles in case of sudden decelerations.

It is well known that crashes on roads and highways occur not only due to the lack of respect of the safety distance between the cars, but also due to disattention, even if only momentary, of the following driver. This kind of disattention is favoured by the fact that the "stop" lights show that the vehicle is braking, but don't indicate if it is only slowing down or if it is hardly braking due to a sudden danger.

It is the aim of the present invention to determine the automatic blinking of the emergency lights of a vehicle that is suddenly braking so as to immediately advise the following vehicles of a possible danger.

The aim is achieved by means of the device according to the present invention, consisting of an inertial switch which, through a logic circuit, causes the actioning of the usual emergency blinking lights in case of decelerations superior to a predetermined value.

The advantage obtained by means of the present invention mainly consists in the fact that it enables to avoid a high percentage of the actual accidents on normal roads and on highways.

The present invention will be described more in detail hereinbelow referring to the attached drawings in which a preferred embodiment is shown.

Figure 1, shows a section view of the inertial switch.

Figure 2, shows the electric circuit for the actioning of the emergency blinking lights.

The figures show a device for automatically inserting the emergency lights of vehicles in case of sudden decelerations, comprising a container 1 placed parallel to the longitudinal axis of the vehicle, and inside which a mass 2 is moving; said mass 2 is resting, towards the front side of the vehicle, on spring 3 provided with a projection that operates the optoelectronic switch 4.

When the vehicle is standing still, during acceleration and at constant speed, said spring 3 keeps said mass 2 backwards pushed and said switch 4 is open. When the deceleration causes on said mass 2 a power superior to the one of spring 3, said mass 2 moves frontwards and said switch 4 closes emitting the signal that activates the emergency blinking through the electric circuit shown in figure 2.

In said figure 2, in parts A and B the usual elements of of the direction indicator and emergency lights are shown, and in detail: the key switch 3'; the emergency push button 4'; the intermittence generator 5, the deviator for the direction indicators 6, two groups of right and left 7 and 8 lamps of the vehicle and eventual trailer.

Numerals 9 and 10 show two circuits OR that allow the lighting of the groups of lamps 7 and 8 by the usual circuit with push button 4' or by the deviator 6, as well as by the outlet signal of the AND circuit 11, the inlets thereof coming from the intermittence generator 5 and by the bistable device 13. The set of the bistable is determined by the signal coming from said inertial switch 15 and eventually also through OR circuit 16, by the ABS antiblocking system 17 and similar, so that the emergency signal is activated also when the braking reaches the limit of adherence to the road, independently from the deceleration degree.

The reset of the bistable 13 is obtained, once push buttons 15 and 17 are released, through AND circuit 14, by operating push button 4' at the release thereof the emergency blinking will be interrupted.

The lights on the board in the vehicle and the eventual acoustic signal have been omitted for semplifying reasons and because they are of no relevance for the understanding of the functioning. According to possible variants, all devices of the circuit may be electromagnetic or electronic.

## Claims

1. A device for automatically inserting the emergency lights on vehicles in case of sudden decelerations, characterized in:
- an inertial switch (15) housed in a container (1), placed parallel to the longitudinal axis of the vehicle, comprising a mass (2) which rests onto a spring (3) towards the front side and is provided with a projection that enters in the optoelectronic switch (4),
- an optoelectronic switch (4) that will be closed emitting the signal that operated the emergency blinking when the deceleration causes onto said mass (2) a power superior than the one of said spring (3) and said mass (2) moves frontwards,
- an electric circuit comprising: an emergency push button (4'), and intermittence generator (5), a deviator for the direction indicators (6), two right and left lamp groups (7 and 8) of the vehicle and eventual trailer, two OR circuits (9 and 10) which allow the lighting of the lamp groups by the usual push button circuit (4') or deviator circuit (6), as well as by the outlet signals of the AND circuit (11), the inlets thereof coming from the intermittence generator (5) and from the bistable device (13), an OR circuit (16) and an antiblocking circuit (17).

2. A device according to claim 1 that operates also by means of a signal appropriately generated by an antiblocking braking system that reacts to a loss of adherence, characteriz ed in that the "set" of the bistable (13) is determined by the signal coming from said inertial switch (15) and eventually also through the OR circuit (16), from the antiblocking braking system ABS (17) and similar, so thta the emergency signal is activated also when the braking reaches the limit of adherence to the road independently from the deceleration degree.

3. A device according to claim 1, characterized in that the "reset" of the bistable (13) is obtained, once inertial switch (15) and antiblocking system (17) are released, through the AND circuit (14) with the actioning of the push button (4'), at the release thereof the blinking will stop.

European Patent Office

EUROPEAN SEARCH REPORT

Application Number

EP 87 83 0447

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 384 269 (CARLSON)<br>* Figures 1,3; abstract *<br>--- | 1 | B 60 Q 1/44 |
| A | DE-A-3 129 814 (BRODTMANN)<br>* Figure 6 *<br>--- | 1 | |
| A | DE-A-3 127 581 (FOLDVARY)<br>* Page 11, line 19 - page 12, line 19 *<br>--- | 1 | |
| A | US-A-4 022 306 (SATO)<br>* Figure 1; column 3, lines 36-64 *<br>----- | 1 | |
| | | | TECHNICAL FIELDS SEARCHED (Int. Cl.4)<br><br>B 60 Q |

The present search report has been drawn up for all claims

| Place of search | Date of completion of the search | Examiner |
|---|---|---|
| THE HAGUE | 26-09-1988 | ONILLON C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)